# EUROPEAN PATENT SPECIFICATION

(11) **EP 3 821 115 B1**
(45) Date of publication and mention of the grant of the patent: **20.04.2022**
(21) Application number: 19742310.6
(22) Date of filing: 09.07.2019
(51) Int. Cl.: F02B 33/06, F01L 7/12, F02B 75/02

(54) **TWO-STROKE INTERNAL COMBUSTION ENGINE AND RELATIVE ACTUATION METHOD**
ZWEITAKTVERBRENNUNGSMOTOR UND SPÜLVERFAHREN
MOTEUR À COMBUSTION INTERNE À DEUX TEMPS ET PROCÉDÉ D'ACTIONNEMENT ASSOCIÉ

(30) Priority: 11.07.2018 IT 201800007094
(43) Date of publication of application: 19.05.2021
(73) Proprietor: Hypertec Solution S.r.l., 47032 Bertinoro (FC) (IT)
(72) Inventor: MARCONI, Pierluigi, 47923 RIMINI (RN) (IT); SMANIO, Stefano, 45010 VILLADOSE (RO) (IT)
(74) Representative: Baldi, Claudio
(86) International application number: PCT/EP2019/068443
(87) International publication number: WO 2020/011800

(56) References cited:
- EP-A1- 0 342 893
- EP-A2- 1 387 057
- CN-A- 102 538 591
- CN-U- 204 077 347
- CN-Y- 201 179 831
- DE-A1- 3 712 750
- FR-A1- 2 589 519
- JP-A- 2013 067 252
- US-A- 5 588 402
- US-A1- 2011 018 378

## Description

The present invention relates to the propulsion of vehicles. In particular, the present invention relates to a two-stroke internal combustion engine and relative actuation method. Moreover, the present invention relates to a vehicle comprising a hybrid propulsion system composed of the internal combustion engine according to the present invention and of an electric motor.

As it is known, two-stroke internal combustion engines can deliver a high specific power, while keeping a compact, lightweight structure, especially when compared to a four-stroke internal combustion engine with a similar power.

However, two-stroke internal combustion engines are impaired by a limited efficiency and high contaminating emissions because of the non-optimal composition of the mixture of air and fluidized fuel in the cylinder, which is for instance due to the presence of residual combusted gases or to a sub-optimal quantity of air (oxygen) in the mixture.

In the prior art, these drawbacks are remedied by increasing the capacity of the internal combustion engine and/or by changing the profile and/or the travel of the pistons of the internal combustion engine. The solutions of the prior art are impaired by the increase in the weight and/or dimensions of the internal combustion engine and are not capable of reducing the contaminating emissions.

In the case of vehicles, and especially motorcycles, the total weight of the vehicle is a primary issue. In fact, the total weight of the vehicle, which is also determined by the volume of the propulsion system, is an important characteristic of the vehicle in terms of handling and fuel consumption.

Therefore, a need of the prior art is to provide internal combustion engines that are especially lightweight and compact, and capable of delivering a sufficient power.

Such a need is especially encountered in hybrid propulsion systems, which comprise an electric motor and an internal combustion engine.

In fact, the presence of the electric motor permits to reduce the contaminating emissions, but it increases the weight of the propulsion system and occupies space that could be otherwise used to increase the capacity of the internal combustion engine. Therefore, the reduction in the weight and dimensions of the internal combustion engine, without losing power, is very important to obtain hybrid systems that can be attractive for the market and suitable for being installed in compact vehicles, such as motorcycles and the like.

EP1387057 discloses a vehicle comprising a two-stroke internal combustion engine and an electric motor according to the preamble of independent claim 1.

CN201179831 discloses a hybrid power motorcycle which is provided with an electric motor, a belt wheel and a transmission belt based on the prior common motorcycle with gasoline as the power.

The purpose of the present invention is to overcome the aforementioned drawbacks.

Specifically, a purpose of the present invention is to disclose a two-stroke internal combustion engine that is capable of delivering high power with limited dimensions and weight.

Moreover, another purpose of the present invention is to disclose an actuation method of an internal combustion engine that is efficient.

Finally, another purpose of the present invention is to disclose a vehicle comprising a hybrid propulsion system with power and weight that are similar to the ones of a typical internal combustion engine.

These purposes, along with additional ones, are achieved according to the invention with the characteristics of the independent claim 1.

Advantageous embodiments of the invention appear from the dependent claims.

Additional features of the invention will appear manifest from the following detailed description, which refers to merely illustrative, not limiting embodiments, which are shown in the appended drawings, wherein:
Fig. 1 is an axonometric view of the internal combustion engine according to an embodiment of the presence invention;
Figs. 2 and 3 are side views of the internal combustion engine of Fig. 1;
Fig. 4 is a lateral sectional view taken along the axis III-III of the internal combustion engine of Fig. 1;
Figs. 5 and 6 are detailed views of an exhaust valve of the internal combustion engine of Fig. 1;
Figs. 7 and 8 are detailed views of a compressor and an airbox of the internal combustion engine of Fig. 1;
Fig. 9 is a sectional view taken along the axis X-X of a cylinder of the internal combustion engine of Fig. 1;
Fig. 10 is a lateral sectional view taken along the axis III-III of a head of the internal combustion engine of Fig. 1;

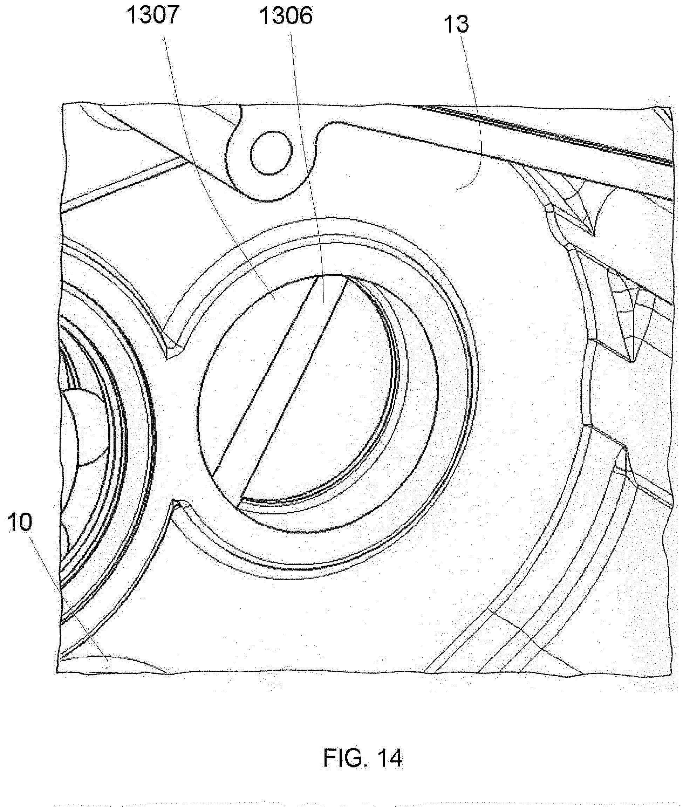

Figs. 11 to 15 are detailed views of a gear box and of a gear system of the internal combustion engine of Fig. 1;
Fig. 16 is a detailed view of a crankcase and of pinions that protrude from the internal combustion engine of Fig. 1;

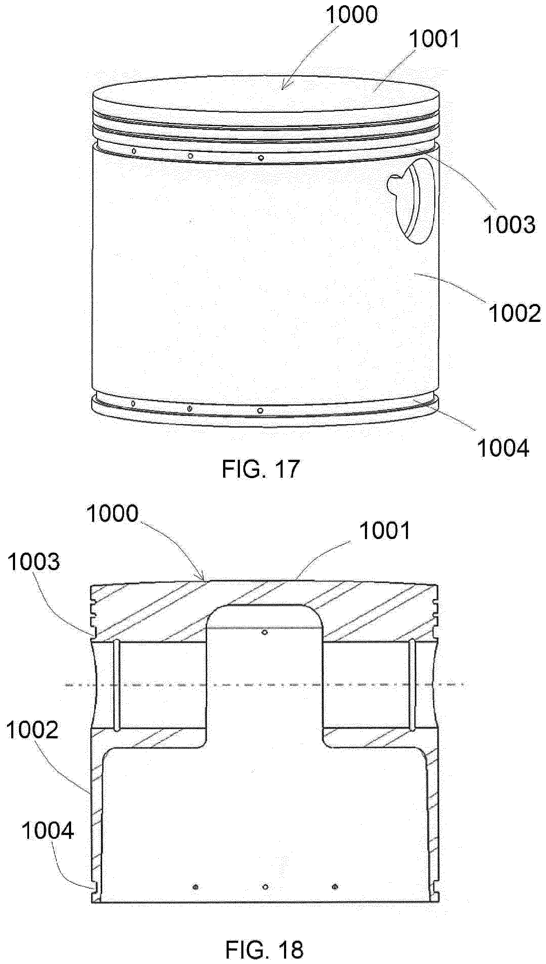

Fig. 17 and 18 are axonometric lateral sectional views taken along the axis III-III of a piston of the internal combustion engine of Fig. 1, respectively; and
Fig. 19 shows a chart of a thermodynamic cycle implemented by the internal combustion engine of Fig. 1.

With reference to the figures, a two-stroke internal combustion engine (1) according to an embodiment of the present invention is disclosed.

The engine comprises a crankcase (10) wherefrom a pair of empty cylinders (20) protrudes, each of them being closed by a head (30) fixed at a free end of the cylinder (20).

The internal combustion engine (1) also comprises a compressor (40) for aeriform substances, preferably of volumetric type. An airbox (50) is coupled with the compressor (40) and with the cylinders (20) in order to put them in fluid communication.

In the example, the cylinders (20) protrude from the crankcase (10) with longitudinal axes (L) in inclined position - otherwise said with a "V"-arrangement, preferably at right angle.

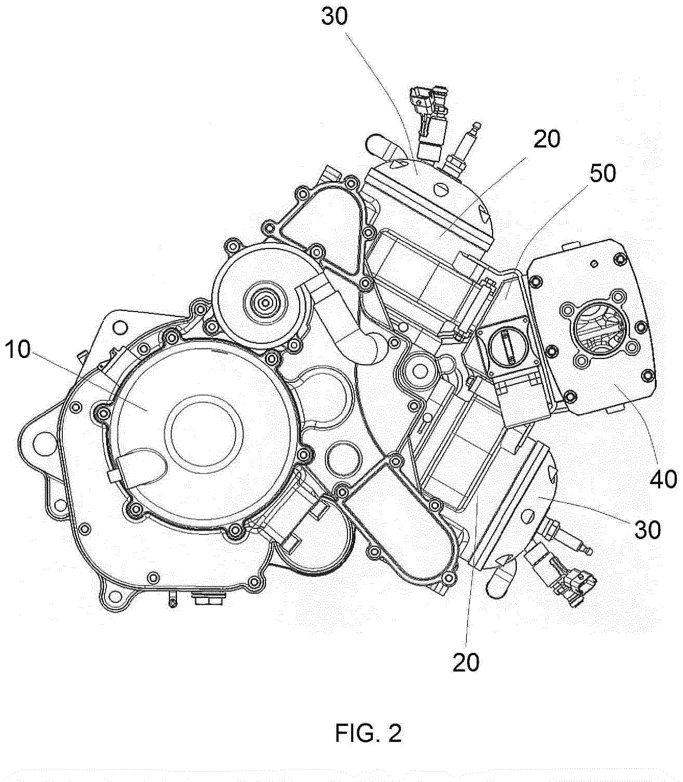

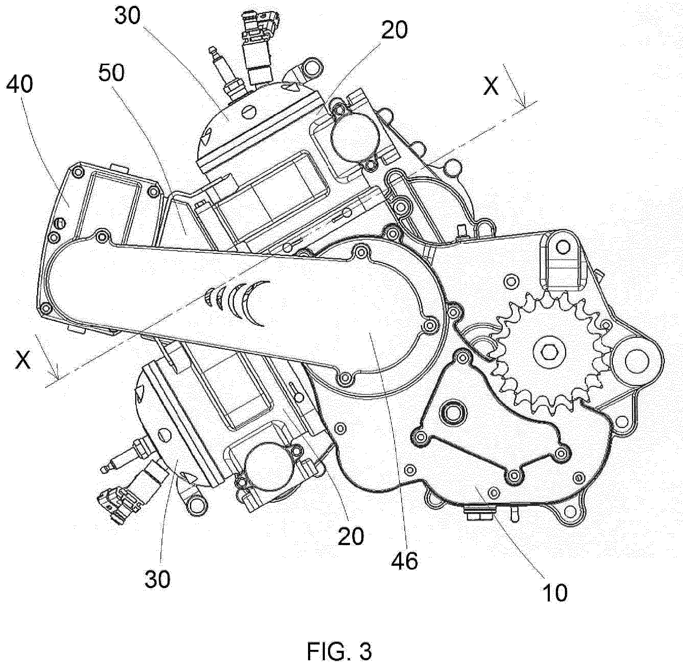

In use, the internal combustion engine (1) is disposed in such a way that one of the cylinders (20) has an inclination comprised between 25° and 35°, preferably 30°, relative to a horizontal plane, with the head (30) directed downwards, as shown in Figs. 2 to 4.

Advantageously, the compressor (40) is disposed in a volume that is at least partially defined by the pair of cylinders (20) - i.e. inside the 'V'.

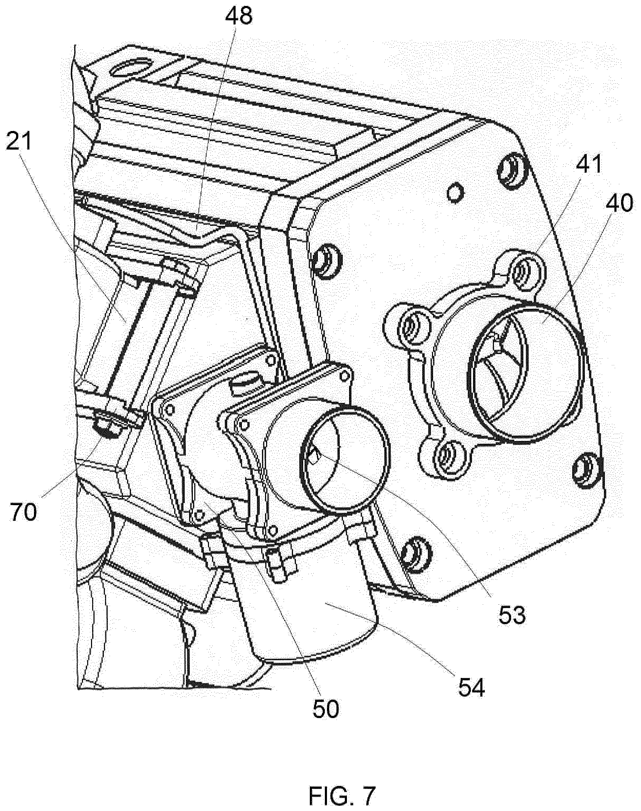

To that end, the internal combustion engine (1) comprises a support element, such for example a flange (48) as shown in the detailed view of Fig. 7, which is coupled with the compressor (40) and connected to the cylinders (20) by means of screws or other fixing means.

The compressor (40) comprises a box body with an intake port (41) and a delivery port (42) in fluid connection with a compression apparatus (43) that is housed in the body. The intake port (41) can be coupled with a butterfly body and an air filter (not shown), whereas the delivery port (42) is coupled with the airbox (50).

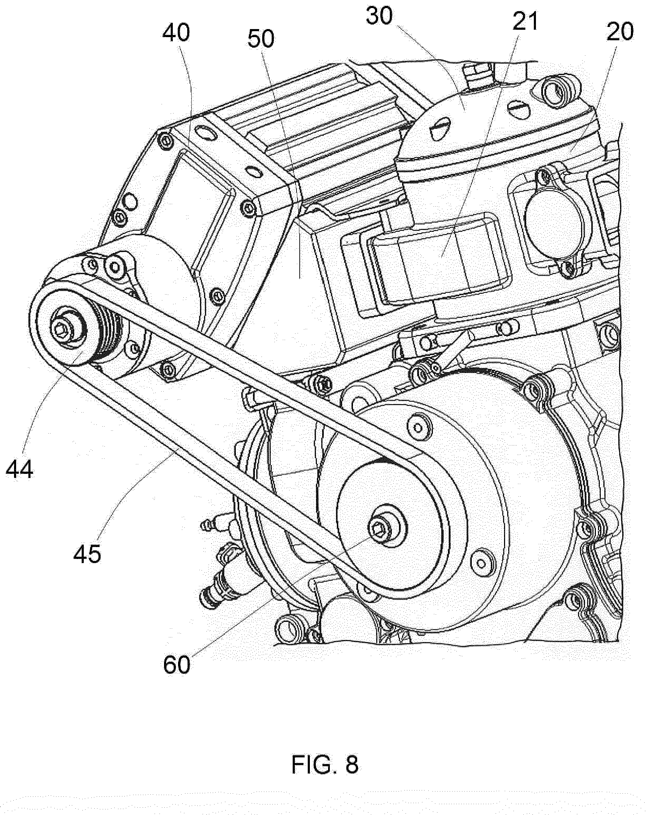

As shown in the detailed view of Fig. 8, the compressor (40) comprises a driving pulley (44) coupled with the compression apparatus (43) and protruding from the box body.

The driving pulley (44) is connected to a crankshaft (60) of the internal combustion engine (1), which is rotatably associated with the crankcase (10). For illustrative purposes, the driving pulley (44) is coupled with another pulley keyed at one free end of the crankshaft (60) that protrudes from the crankcase (10) by means of a transmission element (45).

Preferably, said transmission element (45) is a belt.

In view of the above, the compressor (40) is actuated by the rotation of the crankshaft (60).

Preferably, the driving pulley (44), the transmission element (45) and the free end of the crankshaft (60) are covered by a shell (46).

The airbox (50) comprises an empty box body with substantially triangular cross-section.

Moreover, the airbox (50) comprises an inlet opening (51) formed of a first wall of the body and coupled with the delivery port (42) of the compressor (40), and a pair of outlet conduits (52), each of them protruding from walls of the body in opposite position to the wall of the inlet opening (51).

Each outlet conduit (52) is coupled with an extraction conduit (21) of one of the two cylinders (20).

Preferably, the outlet conduits (52) and the extraction conduits (21) comprise flanged free edges that can be tightened by means of a coupling element (70).

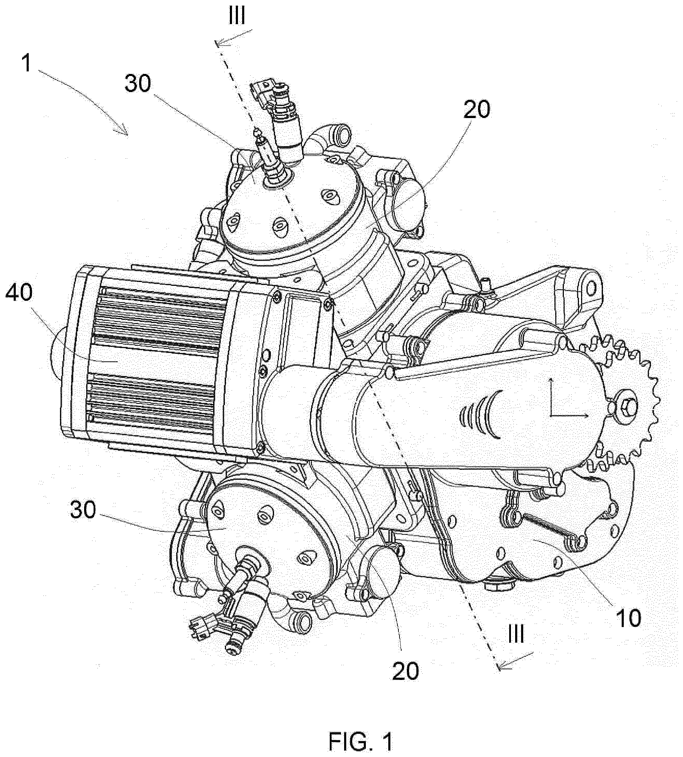

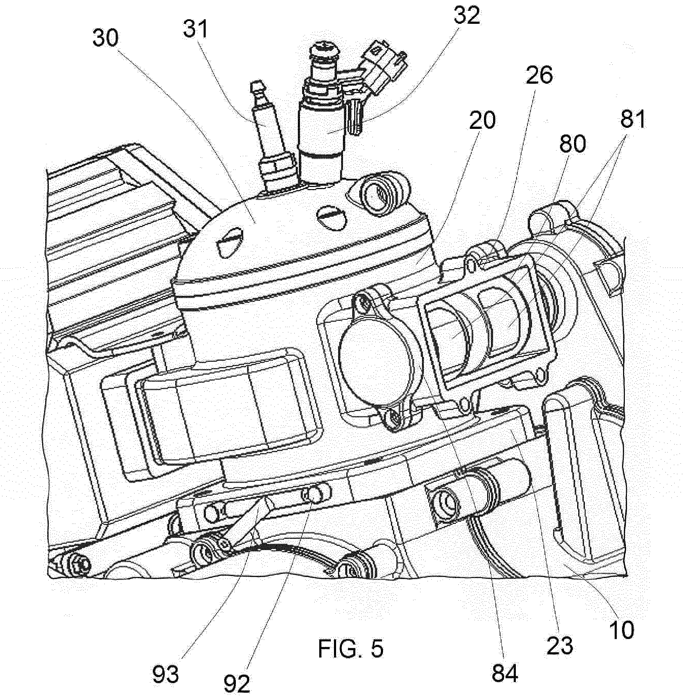

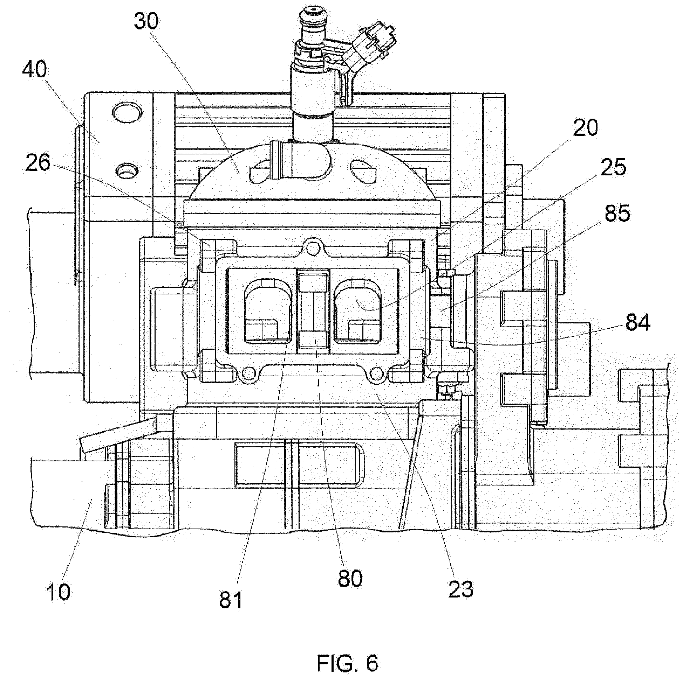

In the example of Figs. 1-7, the coupling element (70) comprises a C-shaped bar, a bolt and a perforated column. In particular, the C-shaped bar is suitably shaped in such a way to match the profiles of the flanged edges of the conduits in adjacent position, whereas a screw of the bolt is inserted in a pair of coaxial through holes formed at the opposite ends of the C-shaped bar, and the perforated column is disposed between the two through holes, as shown in the detailed view of Fig. 7.

Preferably, the airbox (50) also comprises a vent system, as shown in the detailed view of Fig. 7.

According to an embodiment of the present invention, the vent system comprises an electronic butterfly valve (53), a pressure sensor (not shown) and a small electric motor (54).

The butterfly valve (53) is fixed to a wall of the body of the airbox (50), whereas the small electric motor (54) is fixed and operatively coupled with the butterfly valve (53).

The pressure sensor is disposed in the airbox (50) and is operatively connected to the small electric motor (54).

The butterfly valve (53) is in fluid communication with the extraction port (41) of the compressor (40), for example by means of a dedicated duct (not shown).

The vent system allows for adjusting (namely, limiting) the pressure inside the airbox (50); for illustrative purposes, the butterfly valve (53) is configured in such a way to open upon detecting a pressure value that is equal to or higher than a threshold pressure value.

When the butterfly valve (53) opens, the air will be extracted again by the compressor (40) through the extraction port (41).

Each cylinder (20) comprises a body that defines a cavity (22) that is developed along a longitudinal axis (L) of the cylinder (20) between a base (23) and the opposite free end of the cylinder (20).

One or more inlet ports (24) overlook the cavity (24) and an additional cavity with one or more outlet ports (25) opens separately at a similar height. In the example, three inlet ports (24) overlook a cavity, and two outlet ports (25) overlook the other cavity.

The inlet ports (24) and the outlet ports (25) are formed in the proximity of the free end of the cylinder (20), in distal position from the base (23). Advantageously, the inlet ports (24) are formed in opposite position to the outlet ports (25) relative to a plane that comprises the longitudinal axis (L) of the cavity (22). Preferably, the outlet ports (25) are larger than the inlet ports (24). More preferably, the outlet ports (25) are closer to the free end of the cylinder (20) - i.e. to the head (30) mounted on the cylinder (20) - compared to the inlet ports (24).

The inlet ports (24) are in fluid connection with the extraction conduit (21), whereas the outlet ports (25) are in fluid connection with an exhaust conduit (26).

The internal combustion engine (1) comprises two exhaust valves (80), each one of them being disposed in the exhaust conduit (26) of a cylinder (20) to intercept a flow of combusted gases that passes through the outlet port (25) and flows in the exhaust conduit (26). In particular, each exhaust valve (80) is disposed in the exhaust conduit (26) near the outlet port (25) of the cylinder (20).

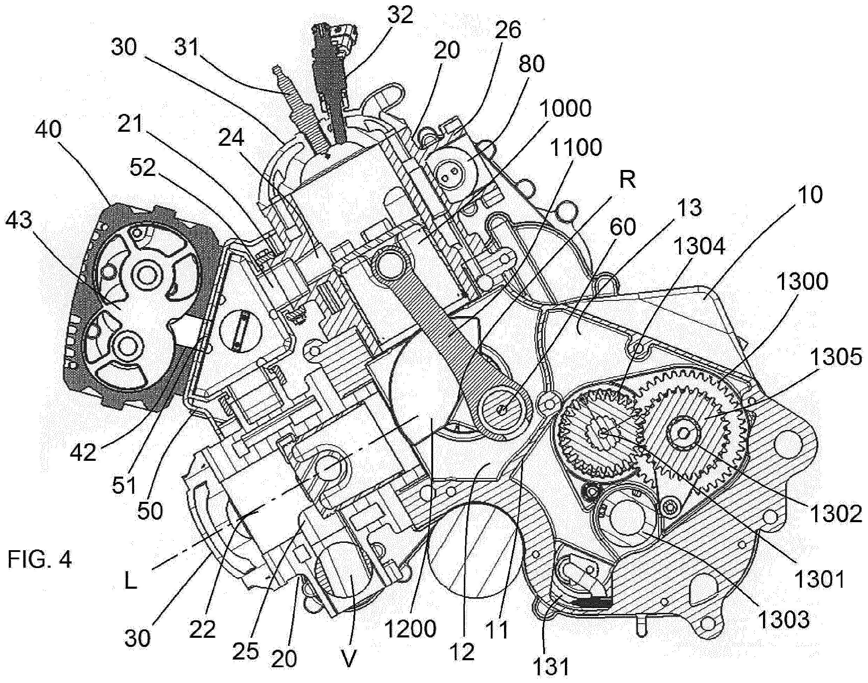

In the example of Figs. 4-6, the exhaust valves (80) are rotary valves, whereas valves of a different type, such as diaphragm or ball valves, can be provided according to other embodiments of the invention.

As shown in Figs. 4-6, each exhaust valve (80) comprises a cylindrical body crossed by two through holes (81) disposed in transverse position relative to an axis of rotation (V).

The transverse section of each through hole (81) corresponds to a transverse section of an outlet port (25). When the exhaust valve (80) is open, the through holes (81) are axially aligned with the outlet ports (25) of the cylinder (20).

Each exhaust valve (80) is supported by two ball bearings (not shown in the figures), preferably ball sliding bearings, of which a first seat (83) is obtained in the structure of the exhaust conduit (24) of the cylinder (20) and a second seat is integral with a closing lid (84) of the valve (80).

A shaft (85) of the valve (80) protrudes from the closing lid (84) and is coupled with an actuator.

According to the present embodiment, the actuator corresponds to the crankshaft (60), which is connected to the shaft (85) by means of a chain (not shown in the figures).

According to a preferred embodiment, the exhaust valve (80) is actuated in phase with the rotation of the internal combustion engine (1), and particularly in phase with the rotation of the crankshaft (60), as better described herein under.

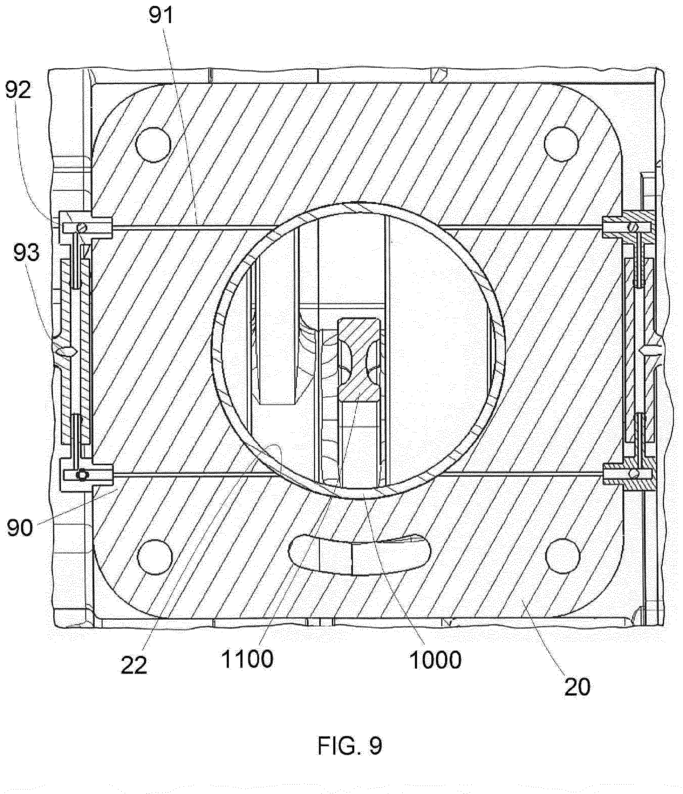

Each cylinder (20) may comprise a lubrication system (90) to lubricate the internal walls that define the cavity (22). Such a lubrication system (90) comprises one or more through holes (91) formed in the base (23) of the cylinder (20) - four through holes (91) as shown in the example of Fig. 9 - with a transverse direction relative to the longitudinal axis (L) of the cylinder (20). A unidirectional valve (92), for example a ball valve, is coupled with each opening of the through holes (91) overlooking the exterior of the cylinder (20) through an outlet port, whereas a lubrication conduit (93) is coupled with an inlet port of the unidirectional valve (92). The lubrication system delivers lubricant oil directly in the cavity (22) of the cylinder (20) through the lubrication conduit and the through holes (91), whereas the unidirectional (92) prevents the return of the lubrication oil or of the combustion mixture in the lubrication conduit (93). Advantageously, the internal combustion engine (1) may comprise a dedicated pump (not shown) connected to the lubrication conduit (93) and electronically controlled in such a way to adjust the delivery of lubricant oil in the cavity (22) of the cylinder (20).

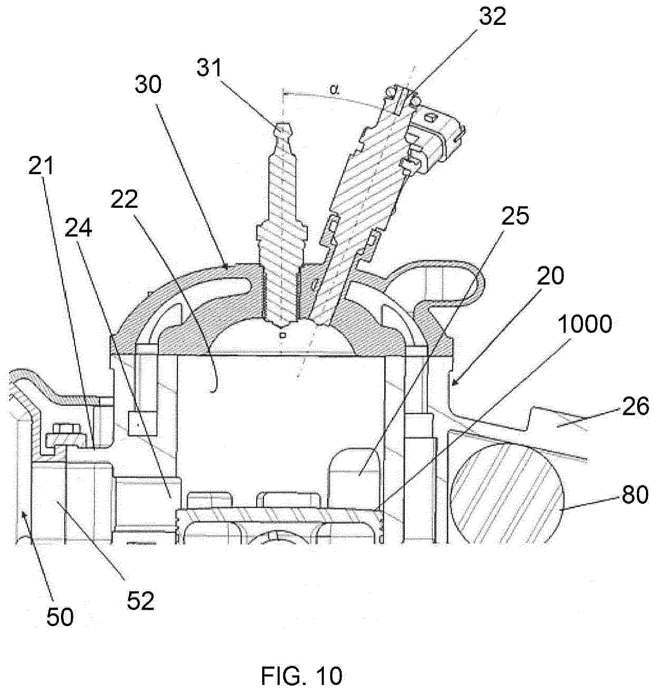

Each head (30) is disposed on the top of the cavity (22) of the cylinder (20), defining a stationary part of a combustion chamber. With reference to Fig. 10, each head (30) has a cap-like structure with a substantially hemispheric cavity suitable for corresponding to the cavity (22) of the cylinder (20). A first housing for a spark plug (31) and a second housing for an injector (32) are obtained in the head (30). The first housing is formed in a central position of the head (30) in such a way that the spark plug (31) is substantially aligned with the longitudinal axis (L) of the cylinder (20) whereon the head (30) is mounted. Advantageously, the second housing is formed in such a way that the injector (32) is inclined relative to the longitudinal axis (L). For illustrative purposes, the Applicant discovered that an injector (32) with a spray angle comprised between 25° and 35°, preferably 30°, achieves an optimized distribution of the fluidized fuel with an inclination that corresponds to an angle (α) comprised between 15° and 25°, preferably 20°, relative to the longitudinal axis (L) of the cylinder (20). Preferably, the injector (32) is inclined in such a way to inject the fluidized fuel towards the inlet ports (24), for example the second housing is disposed between the housing for the spark plug (31) and the exhaust conduit (26) of the cylinder (20).

Such an arrangement is useful to achieve a better mixing of the sprayed fluidized fuel with the pressurized air that is introduced through the inlet ports (24).

Each cylinder (20) slidingly receives a piston (1000) in the cavity (22).

Each piston (1000) comprises a crown (1001) and a shell (1002). The crown (1001) of the piston (1000) overlooks the head of the cylinder and is a mobile part of a combustion chamber defined by the cylinder (20) and by the head (30). Preferably, the shell (1002) comprises a first oil scraper ring (1003) obtained near the crown (1001), and a second oil scraper ring (1004) obtained in the part of the shell (1002) in distal position from the crown (1001). The presence of the two oil scraper rings (1003 and 1004) prevents the return to the combustion chamber of the oil injected in the cavity (22) - for example by the lubrication system (90).

In view of the above, the combustion of lubricant oil during the operation of the engine is eliminated, substantially reducing the contaminating emissions compared to the ordinary two-stroke internal combustion engine with crankcase-pump.

A rod (1100) constrains a piston (1000) to an elbow portion of the crankshaft (60) housed in the crankcase (10) and rotatably associated therein to rotate with an axis of rotation (R) that is transverse to the longitudinal axis (L) of the cylinders (20).

The crankcase (10) comprises a cavity divided in two portions by a wall (11): a shaft chamber (12) and a gear chamber (13).

The shaft chamber (12) is in fluid communication with both cylinders (20) and houses the elbow portion of the crankshaft (60) wherein the rods (1100) associated with the pistons (1000) are rotatably hinged (1100), and at least one rocker (1200).

The gearbox (13) houses a gear system of the internal combustion engine (1). In particular, the gear system (1300) comprises a primary shaft (1301) coupled with the crankshaft (60), a secondary shaft (1302) and a selector (1303).

First toothed wheels (1304) and second toothed wheels (1305) are keyed to the primary shaft (1301) and to the secondary shaft (1302), respectively. As it is known, the toothed wheels (1304 and 1305) are designed to engage selectively engage, as imposed by the selector (1303), in order to couple the primary shaft (1301) with the secondary shaft (1302).

Moreover, a bottom portion of the gearbox (13) defines an oil pan (131) of the internal combustion engine (1).

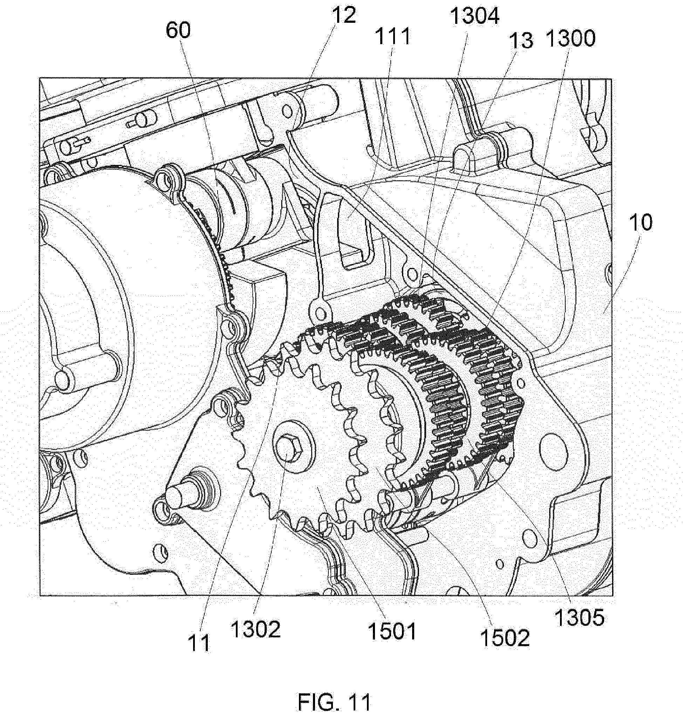

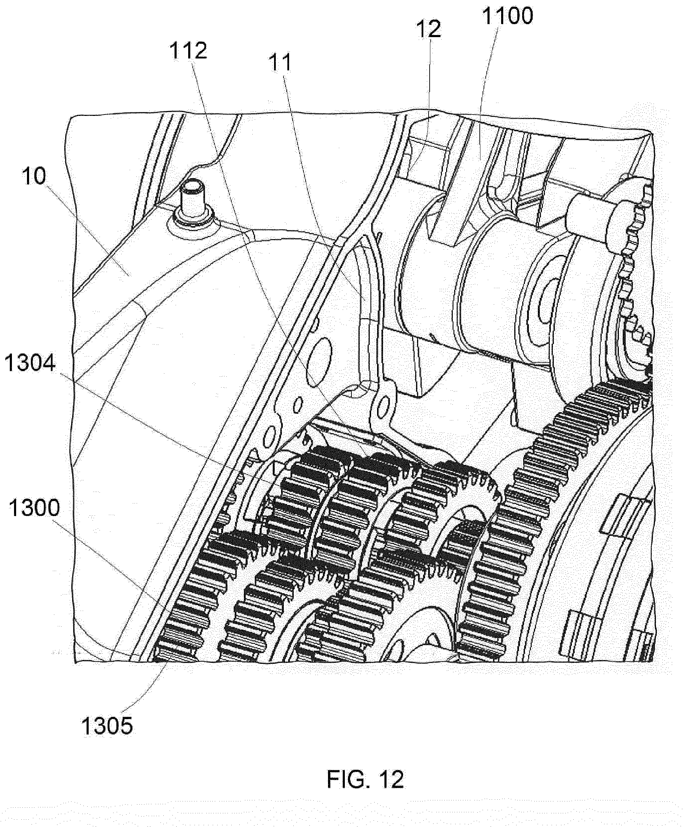

The wall (11) that divides the shaft chamber (12) and the gearbox (13) has a first opening (111) in its upper section, as shown in the detailed view of Fig. 11, and a second opening (112) in its lower section, as shown in the enlarged view of Fig. 12, where the terms "upper" and "lower" refer to the internal combustion engine (1) in its operating position as described above and as shown in Figs. 2 - 4.

The first opening (111) and the second opening (112) put the gearbox (13) and the shaft chamber (12) in fluid communication and let the fluid out from the shaft chamber (12) towards the gearbox (13), thus limiting the pressure in the shaft chamber (12) during the descending of the pistons (1000).

Advantageously, for illustrative, not limiting purposes, the second opening (112) houses a unidirectional valve (not shown), for example a reed valve. Such a valve is configured in such a way to let the lubricant oil pass from the shaft chamber (12) to the gearbox (13), and block a flow of lubricating oil in inverse direction, thus preventing the oil from overflowing from the shaft chamber (12) in the cylinder (20) in lower position, i.e. the cylinder (20) with the base (23) in lower position relative to a bottom of the shaft chamber (12) when the internal combustion engine (1) is disposed in operation.

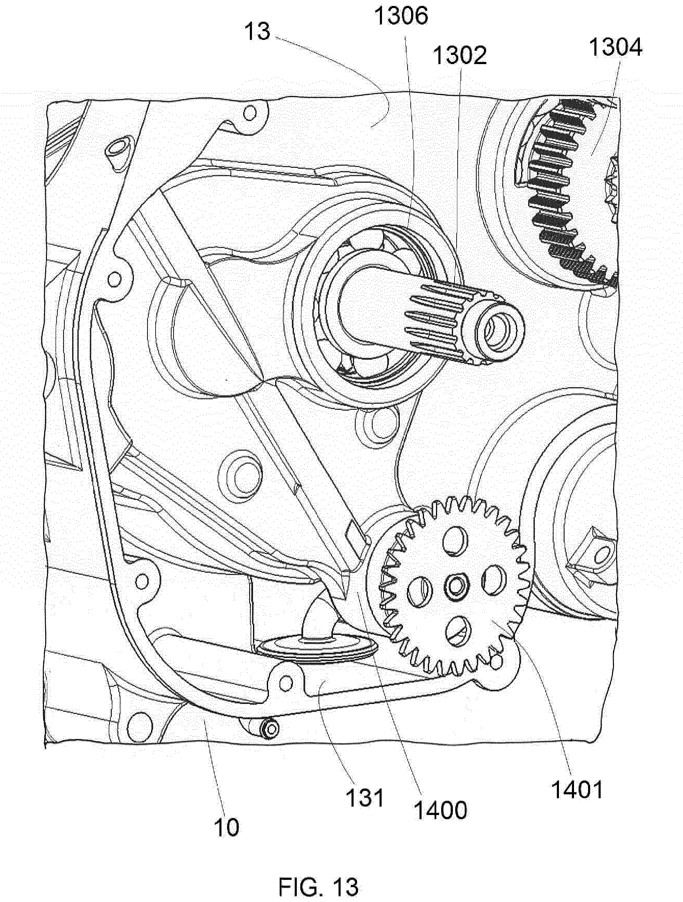

Moreover, as shown in the detailed view of Fig. 13, the internal combustion engine (1) may comprise a pump (1400) disposed in the bottom of the oil pan (131).

Such a pump (1400) is in fluid communication with a seat of first bench bearings (1307) through a conduit (1306) obtained in the crankcase (10), said first bench bearings (1307) rotatably coupling the secondary shaft (1302) with the crankcase (10).

According to the preferred embodiment disclosed herein, the pump (1400) comprises a toothed wheel (1401) mounted on a shaft (1402) of the pump (1400). The toothed wheel (1401) is coupled with the primary shaft (1301) of the gear system (1300) by means of a transmission element, such as a chain (not shown), in such a way that a rotation of the primary shaft (1301) actuates the pump (1400).

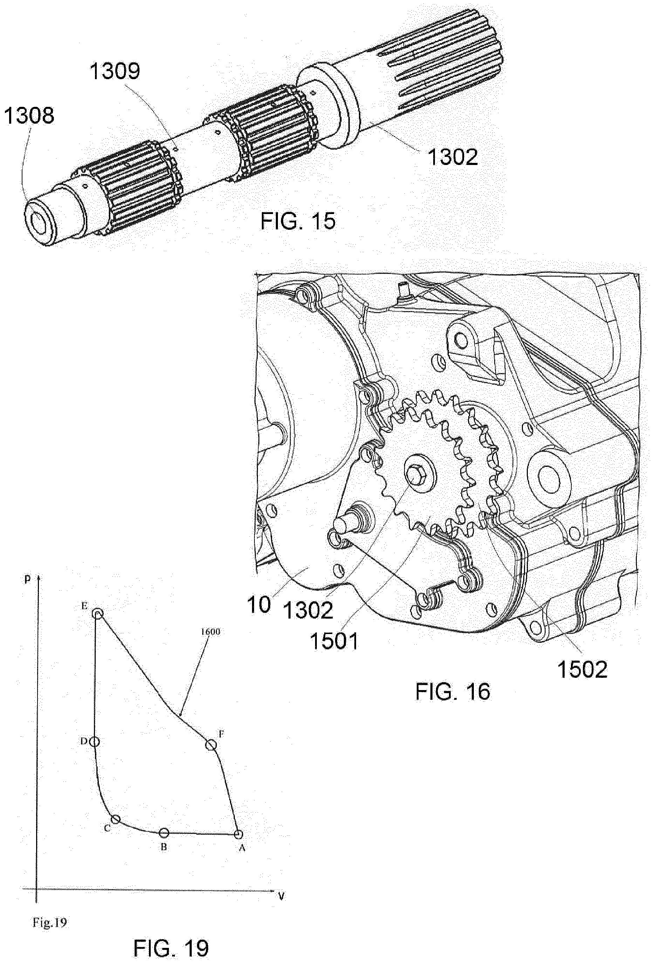

Additionally, the secondary shaft (1302) of the gear system (1300) may comprise a longitudinal through hole (1308) that extends along an axis of symmetry of the secondary shaft (1302), and one or more radial through holes (1309) in fluid communication with the longitudinal through hole (1308), as shown in the detailed view of Fig. 15. Because of said through holes (1308 and 1309), part of the lubricating oil that is delivered by the pump (1400), in correspondence of the seat of the first bench bearings (1307), is transferred to a seat (not shown) of second bench bearings of the secondary shaft (1302) and to toothed wheels (1305) keyed to the secondary shaft (1302), thus lubricating said parts continuously and uniformly.

According to an embodiment of the present invention, the internal combustion engine (1) comprises a first pinion (1501) and a second pinion (1502), as shown in the detailed view of Figs. 11 and 16, which are keyed to the secondary shaft (1302) of the gear system. In particular, the first pinion (1501) and the second pinion (1502) are mounted near a free end of the secondary shaft (1302) that protrudes from the crankcase (10).

The first pinion (1501) is suitable for being coupled by means of a transmission element, such as a chain, to a crown that is fixed to a driving wheel of a vehicle.

The second pinion (1502) is suitable for being coupled to a drive shaft of an electric motor (not shown) by means of a transmission element, such as an additional chain, thus providing a hybrid propulsion system for vehicles, in particular for motorcycles.

Evidently, the internal combustion engine (1) and the electric motor, either alternatively or in combination, can impose a rotation to a driving wheel of the vehicle provided with said hybrid propulsion system because of the special arrangement of the two pinions (1501 and 1502) on the secondary shaft (1302) of the gearshift (1300), without requiring any additional transmission and/or reduction elements of the motion imposed by the internal combustion engine (1) and by the electric motor.

The internal combustion engine (1) permits to obtain an especially effective thermodynamic cycle. Such a cycle is obtained according to an operating method of the aforementioned engine that will be described herein under with reference to the chart (1600) of Fig. 19.

Initially, as shown in section A-C of the chart (1600), an extraction step is implemented, wherein the piston (1000) slides in the cavity (22) of the cylinder (20) until a first position or Bottom Dead Center (BDC) is reached, with the crown (1001) at a maximum longitudinal distance from the head (30) and at a minimum distance from the crankshaft (60).

The internal combustion engine (1) is configured in such a way to start closing the exhaust valve (80) preferably immediately before the piston (1000) reaches the BDC and specifically with a value of the engine travel/piston travel ratio comprised between 0.90 and 1, in correspondence of point B of the chart (1600). Moreover, the internal combustion engine (1) is configured in such a way to finish closing the exhaust valve (80) preferably immediately after reaching the BDC, i.e. at the beginning of the ascending of the piston (1000) towards the head (30) and specifically with a value of the engine travel/piston travel ratio comprised between 0.25 and 0.40. Considering an engine travel/piston travel ratio when the valve starts closing, the ratio will be comprised between 0 and 0.1.

While the exhaust valve (80) is closed, the flow rate of the gases - including the compressed air introduced by the compressor (40) - emitted from the cavity (22) of the cylinder (20) through the outlet ports (25) is reduced. In particular, after the valve (80) is completely closed, a first increase of the pressure is obtained in the combustion chamber, as shown in section B-C of the chart (1600), because of the compressed air that is introduced by the compressor (40) through the inlet ports (24).

During this step, the pressure inside the combustion chamber increases because of two facts: the pressure of the compressed air that is injected by the compressor (40), and the force exerted by the piston (1000) during the ascending from the BDC towards the head (30), which reduces the volume of the combustion chamber.

As shown in section C-D of the chart (1600), a compression step of the internal combustion engine (1) starts when the outlet ports (25) and the inlet ports (24) of the cylinder (20) are completely closed by the piston (1000), i.e. when the piston (1000) prevents a fluid communication between the cavity (22) and the ports (24 and 25) in correspondence of point C of the chart (1600). Said compression step of the internal combustion engine (1) continues until the piston (1000) reaches an Upper Dead Center (UDC), in correspondence of point D of the chart (1600), i.e. with the piston (1001) at a minimum distance from the head (30) and at a maximum distance from the crankshaft (60). During this step, the internal combustion engine (1) is configured to actuate the injector (32) in such a way to introduce fluidized fuel in the combustion chamber. Specifically, the inclination of the injector (32) permits a uniform mixing of the fluidized fuel that is sprayed with the pressurized air contained in the combustion chamber. Because of the introduction of the fluidized fuel and of the compression exerted by the piston (1000) during the ascending along the cylinder (20), the pressure inside the combustion chamber suffers a second increase, which is higher than the first increase.

When the piston (1000) reaches the UDC, the method provides for triggering the combustion of the air and fluidized fuel mixture contained in the combustion chamber, actuating the spark plug (31).The triggering of the mixture causes the explosion of the mixture, rapidly increasing the pressure inside the combustion chamber by a third pressure increase that is much higher than the previous ones, as shown in section D-E of the chart (1600).

The following step is an expansion step, as shown in section E-F of the chart (1600), wherein the piston (1000) is pushed by the expansion of the combusted mixture and descends the cavity (22) of the cylinder (20) towards the BDC.

The descending of the piston (1000) in correspondence of point F of the chart (1600) frees the outlet ports (25) and the extraction ports (26) in correspondence of point F of the chart (1600), thus starting the exhaust step, as shown in section F-A of the chart (1600).

In this step, the method provides for actuating the exhaust valve (80) in such a way to free the exhaust conduit and permit the expulsion of the combusted gases from the cavity (22) of the cylinder through the outlet port (25). The gas exhaust is accelerated by the contemporary injection of compressed air in the cylinder by the compressor.

As it is known, the sliding of the piston (1000) in the cavity (22) of the cylinder (20) in alternate directions that is caused by the combustion of the air-fluidized fuel mixture will determine the rotation of the crankshaft (60), which in turn rotates the shafts (1301 and 1302) of the gear system (1300) and consequently the first pinion (1501), which exerts a motive force on the wheel of a vehicle that is coupled with it.

As it is evident for an expert of the field, the configuration of the internal combustion engine according to the embodiments of the present invention permits to obtain a mixture that is substantially devoid of combusted gases in the combustion chamber, i.e. a mixture that is practically composed of a uniform mixture only formed of air and fluidized fuel, which are respectively introduced by the compressor (40) under pressure through the inlet ports (24), and through the injector (32) disposed on the head (30). Therefore, the internal combustion engine (1) is especially effective, as well as compact and lightweight.

Because of these characteristics, the internal combustion engine (1) can be combined with an electric motor in such a way to obtain a lightweight, compact hybrid propulsion system that is suitable for being used in a compact vehicle, such as for instance a motorcycle.

According to the results of the studies carried out by the Applicant, the internal combustion engine (1) can have a power of approximately 80 KW and a weight of approximately 35 Kg with a bore of the pistons (1000) of approximately 70 mm and a characteristic engine ratio λ between 0.2 and 0.3. The internal combustion dimensions (1) with the aforementioned characteristics can be combined with an electric propulsion system comprising an electric motor, an inverter module and batteries, with a power of approximately 50 KW and a weight of approximately 35 Kg, in order to obtain a hybrid propulsion system with a power between 50 KW and 120 KW and a weight of approximately 70 Kg. Such a hybrid propulsion system is lightweight, and at the same time capable of a high specific power, which is especially suitable for the propulsion of motorcycles.

Numerous equivalent variations and modifications can be made to the present embodiments of the invention, which are within the reach of an expert of the field, falling in any case within the scope of the invention.

For example, although a two-stroke two-cylinder engine has been described, internal combustion engines according to alternative embodiments of the invention (not shown) can have a different number of cylinders, as well as only one cylinder.

Likewise, some elements of the aforementioned lubrication system, such as the oil scraper rings on the shell of the piston, can be omitted and replaced with traditional elements.

According to an embodiment (not shown), the compressor may comprise a dedicated actuation system, such as a small electric motor. In view of the above, the compressor can be controlled independently from the rotation of the crankshaft, although the total weight of the internal combustion engine may increase.

According to an embodiment (not shown), the number of through holes in the exhaust valve may be different; in general, the number of through holes of the exhaust valve corresponds to the number of outlet ports formed in the cylinder.

According to an alternative embodiment (not shown), the exhaust valve can be en electrically operated valve that is actuated by controlling the excitation of a solenoid.

According to an embodiment (not shown), an oil seal can be disposed in correspondence of the closing lid of the exhaust valve to prevent the emission of gases or combustion residues.

Moreover, a cylinder with a plurality of extraction conduits and/or exhaust conduits can be provided, each conduit being coupled with an inlet port or an outlet port, respectively. In such a case, an exhaust valve will be coupled with each exhaust conduit.

According to another embodiment (not shown), the vent system of the airbox may comprise a butterfly valve that is mechanically, and not electronically, actuated.

According to an embodiment, the pump that delivers lubricant oil on the walls that define the cavity of the cylinder may be in fluid connection with the oil pan, thus eliminating the need for a dedicated oil tank.

According to an embodiment, the lubrication system of each cylinder may comprise a dedicated pump, and the two pumps may be suitable for operating independently.

## Claims

1. Vehicle comprising a two-stroke internal combustion engine (1) and an electric motor,
wherein the internal combustion engine (1) comprises:
- an empty cylinder (20)
- a head (30) that closes said empty cylinder (20) on top;
- one or more outlet ports (25) in communication with the interior of said cylinder (20) to discharge gases from said cylinder (20),
- a valve (80) suitable for intercepting a gas flow that passes through said outlet port (25),
- an inlet port (24) in communication with the interior of said cylinder (20) to introduce air inside said cylinder (20),
- a crankshaft (60);
- a piston (1000) mounted on said crankshaft (60), in such a way to alternately slide inside said cylinder between a first position, wherein the piston (1000) closes the inlet port (24) and the outlet port (25), and a second position, wherein the inlet port (24) and the outlet port (25) are open,
- an injector (32) suitable for injecting a fluidized fuel in the cylinder (20),
- a compressor (40) suitable for injecting compressed air in the cylinder (20) through the inlet port (24); and
- an actuator configured in such a way to actuate the exhaust valve (80) in order to block the gas flow from the cylinder (20) through the outlet port (25) when the piston (1000) is moved from the second position to the first position, and in order to exhaust gases from the cylinder through the outlet port (25), when the piston (1000) is moved from the first position to the second position;
**characterized in that**
said internal combustion engine (1) also comprises
a gear system (1300) provided with a primary shaft (1301) coupled with the crankshaft (60) and a secondary shaft (1302) selectively coupled with the primary shaft (1301), and wherein a first pinion (1501) and a second pinion (1502) are keyed on the secondary shaft (1302), the first pinion (1501) being coupled by means of a first transmission element to a toothed wheel that is integrally fixed with a driving wheel of the vehicle, and the second pinion (1502) being coupled to a drive shaft of the electric motor by means of a second transmission element.

2. The vehicle according to claim 1, wherein the actuator of the internal combustion engine (1) comprises the crankshaft (60).

3. The vehicle of any one of the preceding claims, wherein the exhaust valve (80) of the internal combustion engine (1) is a rotary valve comprising a cylindrical body that is crossed by a through hole (81) disposed in transverse position relative to an axis of rotation (V) and having a cross-section that corresponds to a cross-section of the outlet port (25).

4. The vehicle of any one of the preceding claims, wherein the injector (32) of the internal combustion engine (1) is housed in the head (30) in such a way to be inclined by an angle (α) comprised between 15° and 25°, preferably 20°, relative to a longitudinal axis (L) of the cylinder (20).

5. The vehicle of any one of the preceding claims, wherein said internal combustion engine (1) comprises an airbox (50); said compressor (40) being connected to the outlet port (24) by means of said airbox (50); said airbox (50) comprising a butterfly valve (53) that is configured in such a way to open when a pressure value equal to or higher than a threshold pressure value is detected, putting the airbox (53) in fluid communication with an intake port (41) of the compressor (40).

6. The vehicle of any one of the preceding claims, wherein said internal combustion engine (1) comprises a transmission element (60), said compressor (40) comprises a compression apparatus (43) to compress the air, a driving pulley (44) coupled with the compression apparatus (43), the driving pulley (44) being connected to the crankshaft (60) by means of said transmission element (45) in such a way that the rotation of the crankshaft (60) will actuate the compression apparatus (43).

7. The vehicle of any one of the previous claims, wherein the compressor (40) of the internal combustion engine (1) is configured in such a way to compress the air at a constant pressure.

8. The vehicle of any one of the preceding claims, wherein said internal combustion engine (1) comprises a pair of cylinders (20) disposed with longitudinal axes (L) in inclined position, and wherein the compressor (40) of the internal combustion engine (1) is disposed in a concavity defined by the pair of cylinders (20).

9. Actuation method of an internal combustion engine (1) of a vehicle according to any one of the preceding claims 1 to 8, comprising the following steps:
- introducing compressed air inside the cylinder (20) through the inlet port (24),
- closing the outlet port (25) when the piston (1000) is moved from the second position to the first position,
- introducing a fluidized fuel inside the cylinder (20) after closing the inlet port (25), and
- triggering the combustion of a mixture formed of the fluidized fuel and of the compressed air inside the cylinder (20) when the piston (1000) is in the first position.

## Patentansprüche

1. Fahrzeug, umfassend einen Zweitaktverbrennungsmotor (1) und einen Elektromotor,
wobei der Verbrennungsmotor (1) umfasst:
- einen leeren Zylinder (20),
- einen Kopf (30), der den leeren Zylinder (20) oben verschließt;
- eine oder mehrere Auslassöffnungen (25), die mit dem Inneren des Zylinders (20) in Verbindung stehen, um Abgase aus dem Zylinder (20) abzulassen,
- ein Ventil (80), das geeignet ist, einen Gasstrom, der durch die Auslassöffnung (25) strömt, abzufangen,
- eine Einlassöffnung (24), die mit dem Inneren des Zylinders (20) in Verbindung stehen, um Luft in den Zylinder (20) einzuführen,
- eine Kurbelwelle (60);
- einen Kolben (1000), der auf der Kurbelwelle (60) so montiert ist, dass er im Innern des Zylinders abwechselnd zwischen einer ersten Position, in der der Kolben (1000) die Einlassöffnung (24) und die Auslassöffnung (25) schließt, und einer zweiten Position, in der die Einlassöffnung (24) und die Auslassöffnung (25) geöffnet sind, verschiebbar ist,
- eine Einspritzdüse (32), die geeignet ist, einen fluidisierten Brennstoff in den Zylinder (20) einzuspritzen,
- einen Verdichter (40), der geeignet ist, Druckluft durch die Einlassöffnung (24) in den Zylinder (20) einzuspritzen; und
- einen Aktor, der ausgebildet ist, um das Auslassventil (80) derart zu betätigen, dass der Gasstrom aus dem Zylinder (20) durch die Auslassöffnung (25) gesperrt wird, wenn der Kolben (1000) von der zweiten Position in die erste Position bewegt wird, und Gas aus dem Zylinder durch die Auslassöffnung (25) abgelassen wird, wenn der Kolben (1000) von der ersten Position in die zweite Position bewegt wird;
**dadurch gekennzeichnet, dass**
der Verbrennungsmotor (1) ferner umfasst
ein Getriebesystem (1300), das mit einer Primärwelle (1301) versehen ist, die mit der Kurbelwelle (60) gekoppelt ist, und eine Sekundärwelle (1302), die wahlweise mit der Primärwelle (1301) koppelbar ist, und wobei ein erstes Ritzel (1501) und ein zweites Ritzel (1502) auf die Sekundärwelle (1302) aufgezogen sind, wobei das erste Ritzel (1501) mittels eines ersten Übertragungselements mit einem Zahnrad gekoppelt ist, das einstückig an einem Antriebsrad des Fahrzeugs befestigt ist, und wobei das zweite Ritzel (1502) mittels eines zweiten Übertragungselements mit einer Antriebswelle des Elektromotors gekoppelt ist.

2. Fahrzeug nach Anspruch 1, wobei der Aktor des Verbrennungsmotors (1) die Kurbelwelle (60) umfasst.

3. Fahrzeug nach einem der vorstehenden Ansprüche, wobei das Auslassventil (80) des Verbrennungsmotors (1) ein Drehventil ist, das einen zylindrischen Körper umfasst, der von einem Durchgangsloch (81) durchquert ist, das quer zu einer Drehachse (V) angeordnet ist und einen Querschnitt aufweist, der einem Querschnitt der Auslassöffnung (25) entspricht.

4. Fahrzeug nach einem der vorstehenden Ansprüche, wobei die Einspritzdüse (32) des Verbrennungsmotors (1) in dem Kopf (30) derart untergebracht ist, dass sie in einem Winkel (a) zwischen 15° und 25°, vorzugsweise 20°, relativ zu einer Längsachse (L) des Zylinders (20) geneigt ist.

5. Fahrzeug nach einem der vorstehenden Ansprüche, wobei der Verbrennungsmotor (1) einen Luftkasten (50) umfasst; wobei der Verdichter (40) mittels des Luftkastens (50) mit der Einlassöffnung (24) verbunden ist; wobei der Luftkasten (50) eine Drosselklappe (53) umfasst, die derart ausgebildet ist, dass sie sich öffnet, wenn ein Druckwert erfasst wird, der gleich oder höher als ein Druckschwellenwert ist, und den Luftkasten (53) in Fluidverbindung mit einer Einlassöffnung (41) des Verdichters (40) setzt.

6. Fahrzeug nach einem der vorstehenden Ansprüche, wobei der Verbrennungsmotor (1) ein Übertragungselement (60) umfasst, der Verdichter (40) eine Verdichtungsvorrichtung (43) zum Verdichten der Luft umfasst, eine Antriebsscheibe (44), die mit der Verdichtungsvorrichtung (43) gekoppelt ist, wobei die Antriebsscheibe (44) mittels des Übertragungselements mit der Kurbelwelle (60) derart verbunden ist, dass die Drehung der Kurbelwelle (60) die Verdichtungsvorrichtung (43) betätigt.

7. Fahrzeug nach einem der vorstehenden Ansprüche, wobei der Verdichter (40) des Verbrennungsmotors (1) derart ausgebildet ist, dass die Luft mit konstantem Druck verdichtet wird.

8. Fahrzeug nach einem der vorstehenden Ansprüche, wobei der Verbrennungsmotor (1) ein Paar von Zylindern (20) umfasst, die mit ihren jeweiligen Längsachsen (L) in geneigter Position angeordnet sind und wobei der Verdichter (40) des Verbrennungsmotors (1) in einer von dem Paar von Zylindern (20) definierten Konkavität angeordnet ist.

9. Verfahren zur Betätigung eines Verbrennungsmotors (1) eines Fahrzeugs nach einem der Ansprüche 1 bis 8, wobei das Verfahren die folgenden Schritte umfasst:
- Einführen von Druckluft durch die Einlassöffnung (24) ins Innere des Zylinders (20),
- Schließen der Auslassöffnung (25), wenn der Kolben (1000) von der zweiten Position in die erste Position bewegt wird,
- Einführen eines fluidisierten Brennstoff ins Innere des Zylinders (20), nachdem die Einlassöffnung (25) geschlossen wurde, und
- Auslösen der Verbrennung eines aus dem fluidisierten Brennstoff und der Druckluft im Innern des Zylinders (20) gebildeten Gemischs, wenn der Kolben (1000) sich in der ersten Position befindet.

## Revendications

1. Véhicule comprenant un moteur endothermique (1) à deux temps et un moteur électrique,
dont le moteur endothermique (1) comprend :
- un cylindre (20) creux,
- une culasse (30) qui ferme supérieurement ledit cylindre (20) creux ;
- une ou plusieurs baies d'échappement (25) en communication avec l'intérieur du dit cylindre (20), pour permettre l'échappement de gaz du dit cylindre (20),
- une soupape (80) apte à intercepter un flux de gaz qui traverse ladite baie d'échappement (25),
- une baie d'aspiration (24) en communication avec l'intérieur du dit cylindre (20), pour l'admission d'air dans ledit cylindre (20),
- un vilebrequin (60);
- un piston (1000) monté sur ledit vilebrequin (60), de manière à pouvoir coulisser de façon alternée à l'intérieur du dit cylindre entre une première position, où le piston (1000) ferme la baie d'aspiration (24) et la baie d'échappement (25), et une seconde position, où la baie d'aspiration (24) et la baie d'échappement (25) sont ouvertes,
- un injecteur (32) apte à injecter un liquide combustible dans le cylindre (20),
- un compresseur (40) apte à injecter de l'air comprimé dans le cylindre (20) à travers la baie d'aspiration (24) ; et
- un actionneur configuré pour activer la soupape d'échappement (80) de façon à bloquer le flux de gaz depuis le cylindre (20) à travers la baie d'échappement (25) lorsque le piston (1000) se déplace de la seconde position sur la première position et ainsi permettre l'échappement de gaz du cylindre à travers la baie d'échappement (25), lorsque le piston (1000) se déplace de la première position sur la seconde position ;
**caractérisé en ce que**
ledit moteur endothermique (1) comprend également un système de changement de vitesse (1300) doté d'un arbre primaire (1301) couplé au vilebrequin (60) et un arbre secondaire (1302) qui peut être couplé sélectivement à l'arbre primaire (1301), et où sur l'arbre secondaire (1302) sont clavetés un premier pignon (1501) et un second pignon (1502), le premier pignon (1501) étant couplé moyennant un premier élément de transmission à une roue dentée solidaire à une roue motrice du véhicule et le second pignon (1502) étant couplé moyennant un second élément de transmission à un arbre d'entraînement du moteur électrique.

2. Véhicule selon la revendication 1, où l'actionneur du moteur endothermique (1) comprend le vilebrequin (60).

3. Véhicule selon l'une quelconque des revendications précédentes, où la soupape d'échappement (80) du moteur endothermique (1) est une soupape rotative comprenant un corps cylindrique traversé par un orifice passant (81) transversal à un axe de rotation (V) et ayant une section transversale correspondante à une section transversale de la baie d'échappement (25).

4. Véhicule selon l'une quelconque des revendications précédentes, où l'injecteur (32) du moteur endothermique (1) est niché dans la culasse (30) de manière à être incliné d'un angle (a) compris entre 15° et 25°, préférablement égal à 20°, par rapport à un axe longitudinal (L) du cylindre (20).

5. Véhicule selon l'une quelconque des revendications précédentes, où ledit moteur endothermique (1) comprend une boîte à air (50) ; ledit compresseur (40) étant relié à la baie aspiration (24) moyennant ladite boîte à air (50) ; ladite boîte à air (50) comprenant une vanne papillon (53) configurée pour s'ouvrir lors de la détection d'une valeur de pression égale ou majeure à une valeur de pression de seuil et mettre en communication le fluide de la boîte à air (53) avec une baie d'aspiration (41) du compresseur (40).

6. Véhicule selon l'une quelconque des revendications précédentes, où ledit moteur endothermique (1) comprend un élément de transmission (60), ledit compresseur (40) comprend un dispositif de compression (43) pour comprimer l'air, une poulie motrice (44) couplée au dispositif de compression (43), la poulie motrice (44) étant reliée au vilebrequin (60) moyennant ledit élément de transmission (45) de sorte que la rotation du vilebrequin (60) active le dispositif de compression (43).

7. Véhicule selon l'une quelconque des revendications précédentes, où le compresseur (40) du moteur endothermique (1) est configuré pour comprimer l'air à une pression constante.

8. Véhicule selon l'une quelconque des revendications précédentes, où ledit moteur endothermique (1) comprend une paire de cylindres (20) disposés avec des axes longitudinaux (L) correspondants inclinés entre eux et où le compresseur (40) du moteur endothermique (1) est disposé dans une concavité délimitée par la paire de cylindres (20).

9. Méthode d'activation d'un moteur endothermique (1) d'un véhicule selon l'une quelconque des revendications de 1 à 8, ladite méthode comprenant les phases suivantes :
- introduction d'air comprimé à l'intérieur du cylindre (20) à travers la baie d'aspiration (24),
- fermeture de la baie d'échappement (25) lorsque le piston (1000) se déplace de la seconde position sur la première position,
- introduction d'un liquide combustible à l'intérieur du cylindre (20) après la fermeture de la baie d'échappement (25), et
- amorçage de la combustion d'un mélange formé par le liquide combustible et l'air comprimé à l'intérieur du cylindre (20) lorsque le piston (1000) est disposé sur la première position.
